## Europäisches Patentamt
## European Patent Office
## Office européen des brevets

(19)

(11) Numéro de publication: **0 088 199**
**A1**

(12)

# DEMANDE DE BREVET EUROPEEN

(21) Numéro de dépôt: **82830131.7**

(22) Date de dépôt: **14.05.82**

(51) Int. Cl.³: **F 02 M 21/02**

(30) Priorité: **08.03.82 IT 335982**

(43) Date de publication de la demande: **14.09.83**
**Bulletin 83/37**

(84) Etats contractants désignés: **AT BE DE FR GB LU NL SE**

(71) Demandeur: **Bogetti, Romano, Via Vittorio Emanuele II, 35, I-12062 Cherasco (IT)**

(72) Inventeur: **Bogetti, Romano, Via Vittorio Emanuele II, 35, I-12062 Cherasco (IT)**

(74) Mandataire: **Rinaldi, Carlo, Studio Brevetti Nazionali ed Esteri Via Rino Ruscello, 2, I-40134 Bologna (IT)**

(54) **Dispositif automatique correcteur de la carburation des moteurs à combustion interne, fonctionnant aux gas de pétroles liquefiés ou comprimés.**

(57) Une installation d'alimentation du moteur par carburants gazeux comprend un réducteur (1), une conduite (8) qui relie le réducteur (1) au mélangeur (2) introduit par le haut dans le conduit d'un carburateur (4) et dont la bouche de sortie (20) se trouve dans la zone étroite du venturi (5); le carburateur (4) et un collecteur (7), séparé du carburateur (4) par un papillon (6), forment le conduit d'aspiration du moteur.

Le dispositif automatique est composé d'une boîte rigide, qui renferme au moins un élément à membrane sensible au vide existant dans une partie du conduit; à l'élément sensible sont rendus solidaires des dispositifs aptes à agir sur des organes qui contrôlent le débit du gaz dans la conduite (8); ces dispositifs actionnent ces organes pour appauvrir le mélange en répondant à un signal de vide, relevé par l'élément à membrane et qui se vérifie quand le moteur fonctionne en utilisation.

DISPOSITIF AUTOMATIQUE CORRECTEUR DE LA CARBURATION DES MO
TEURS A COMBUSTION INTERNE FONCTIONNANT AUX GAZ DE PETROLES
LIQUEFIES OU COMPRIMES.

L'invention concerne les installations qui permettent l'alimentation par combustibles gazeux des moteurs à combustion interne, le plus souvent pour traction automobile, et se rapporte plus particulièrement à un dispositif faisant partie de ces installations, qui est apte à limiter l'afflux du gaz dans des conditions déterminées d'emploi du moteur.

On connaît des dispositifs du type mentionné ci-dessus qui, en plus des mélangeurs, sont placés dans ces installations pour résoudre des problèmes particuliers d'enrichissement ou d'appauvrissement du mélange d'alimentation dans certaines conditions d'emploi du moteur.
Un des dispositifs consiste en un boîtier métallique dont l'intérieur est divisé en deux chambres par une membrane élastique, sur laquelle est appliqué un ressort; la première de ces chambres communique d'un côté, avec le réducteur de pression et de l'autre côté avec le mélangeur; la seconde chambre, dans laquelle est placé le ressort, communique avec le conduit d'aspiration du moteur au-dessous du papillon; dans certaines conditions de fonctionnement, la membrane se déplace et remplit la première chambre de gaz; dans d'autres conditions, la membrane se déplace en sens inverse et envoie le gaz mélangeur, en plus de celui qui provient du réducteur de pression; les opérations de remplissage ou de dégagement de gaz de la première chambre, provoquées par la membrane, se produisent suivant que sur la membrane, les forces du ressort ou les forces du vide existant dans le conduit d'aspiration l'emportent. Le défaut de ces disposi tifs est qu'ils envoient du gaz dans une période transitoi re d'accélération, qu'ils disposent d'un volume pour le gaz qui est déterminé de façon expérimentale, mais qui peut ê tre excessif dans des conditions déterminées ou insuffisan tes dans d'autres; ensuite, les dimensions des chambres pour le gaz deviennent un élément de dosage de l'installa tion et doivent être définies pour chaque type de voiture ou de moteur.

La présente invention a pour but de remédier à ces inconvé nients. L'invention, telle qu'elle est caractérisée dans les revendications, résoud le problème qui consiste à créer une installation d'alimentation des moteurs à gaz de pétro les liquéfiés ou à gaz comprimés, apte à limiter le débit du gaz dans des conditions déterminées de fonctionnement du moteur, pour lesquelles l'appauvrissement du mélange air - carburant se traduit par une économie de consommation.

Les avantages obtenus par cette invention résident essen tiellement dans le fait que la carburation est appauvrie dans la courbe d'utilisation du moteur, c'est-à-dire dans les conditions de régime et de remplissage qui se vérifient le plus souvent lors de l'emploi du moteur.

L'invention est exposée plus en détail et se rapporte aux figures qui représentent, à titre d'exemples, des modes d'exécution.

- La fig. 1 représente dans une première version d'exécu tion, le schéma d'une installation au g.p.l. ou métane.
- La fig. 2 représente dans une seconde version d'exécu tion, le schéma d'une installation du type cité ci-dessus.
- La fig. 3 enfin, représente dans une troisième version d'exécution, le schéma d'une installation du même type.

3  0088199

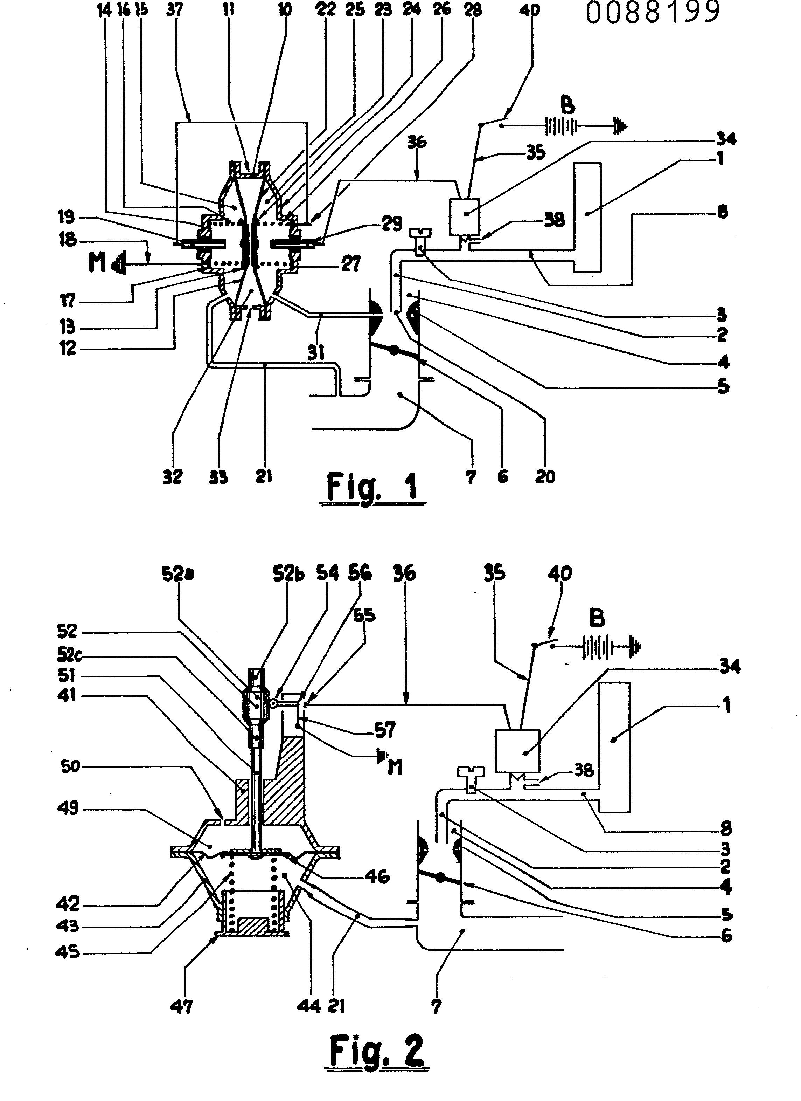

L'installation représentée sur la fig. 1  comprend  un réducteur-vaporisateur 1 relié à un mélangeur 2 au moyen d'une conduite 8 dans laquelle se trouvent une vis de ré glage 3 et une électrovanne 34; cette dernière présente un orifice calibré 38 qui, lorsque l'électrovanne est excitée, s'ouvre pour laisser passer l'air, de l'atmosphère à la con duite 8; le mélangeur 2 est introduit par le haut dans un conduit d'un carburateur 4 et sa bouche de sortie 20 est placée dans la zone étroite du venturi 5.

Une boîte métallique 11 renferme trois chambres 15, 32 et 25, qui ne communiquent pas entr'elles; la chambre 15 est délimitée par un couvercle latéral 14 de la boîte 11 et par

une membrane 12; la chambre 32 est délimitée par la paroi 10 de la boîte 11, par la membrane 12 et par une seconde membrane 22; la chambre 25 est délimitée par la membrane 22 et par un deuxième couvercle latéral 24 de la boîte 11.

La chambre 15 communique avec le collecteur d'aspiration 7 au-dessous du papillon 6 par une canalisation 21; la cham bre 32 communique avec l'atmosphère par une ouverture 33;

la chambre 25 communique avec la zone étroite  du venturi

5 par une canalisation 31.

La partie centrale de la membrane 12 est rendue rigide par une plaquette métallique 13, sur laquelle s'appuie l'extré mité droite du ressort de compression 16; l'autre extrémité du ressort s'appuie sur une première rondelle métallique 17 dont le branchement électrique à la masse M se fait au mo yen d'un rhéophore 18. Une barrette métallique 19, isolée électriquement de la rondelle 17 et du couvercle 14 est in troduite dans la chambre 15 à travers le centre du couver cle 14

La partie centrale de la membrane 22 est rendue rigide par une plaquette métallique 23, sur laquelle s'appuie l'extré

4          0088199

mité gauche d'un ressort de compression 26 et dont l'extré mité droite s'appuie sur une rondelle 27, connectée électri quement à un contact terminal 28; une seconde barrette 29, isolée électriquement de la rondelle 27 et du couvercle 24, est introduite dans la chambre 25 par le centre du couver cle 24.

L'électrovanne 34 est branchée au contact de démarrage 40 du moteur au moyen du rhéophore 35 et à la barrette 29 au moyen du rhéophore 36.

Le contact 40 est branché à la batterie B du véhicule. Le contact 28 est branché à la barrette 19 au moyen du rhéo phore 37.

Lorsqu'elle est excitée, l'électrovanne 34 ouvre l'orifice 38;

ce qui peut se vérifier lorsque les deux plaquettes 23 et 13 se trouvent respectivement et en même temps en contact avec les extrémités intérieures des barrettes 29 et 19; ce n'est qu'à ces conditions que l'on peut vérifier la conti nuité dans le circuit électrique entre la batterie B et la masse M, à travers les rhéophores 35, 36, la barrette 29, la plaquette 23, le ressort 26, la rondelle 27, le contact 28, le rhéophore 37, la barrette 19, la plaquette 13, le ressort 16, la rondelle 17 et enfin, le rhéophore 18; ces contacts ne se produisent en même temps que lorsque les vi des dans le conduit 7 et dans le venturi 5 sont suffisam ment élevés pour déplacer respectivement vers la droite ou

vers la gauche les deux membranes 12 et 22 contre l'action des deux ressorts 16 et 26. Les experts de l'alimentation savent que cela arrive sur une partie de la courbe d'utili sation du moteur, dont l'extension dépend de la dimension des ressorts 16 et 26 et des membranes 12 et 22.

La seconde version d'exécution de l'invention illustrée en fig. 2 prévoit certains éléments déjà présents dans la ver
sion illustrée en fig. 1; aux numéros identiques correspon
dent les éléments identiques. L'installation de la fig. 2
comprend une boîte métallique 41 où est placée une membra
ne 42 qui divise l'intérieur de la boîte 41 en deux cham
bres non communicantes; la chambre 49 communique avec l'at
mosphère au moyen d'une ouverture 50; la chambre 44 communi
que avec le collecteur d'aspiration 7 du moteur, au-dessous
du papillon 6. La membrane est poussée vers le haut par un
ressort 45 placé entre la plaquette 46, apte à rendre rigi
de la partie centrale  de la membrane 46, et la surface in
térieure avant d'une boussole 47 qui est introduite par une
vis sur la partie inférieure 43 de la boîte 41 dans le but
de permettre un déplacement axial pour varier la charge du
ressort 45 sur la membrane 42.

La plaquette 46 supporte une tige 51 qui sort de la boîte
41 pour terminer par un corps cylindrique 52, subdivisé en
une première partie centrale 52a, de rayon relativement é
tendu et en deux autres parties 52b et 52c dont les rayons
sont égaux mais relativement plus petits que celui de la
partie centrale 52a; la partie 52b se trouve au-dessus de
la partie 52a et la partie 52c se trouve au-dessous de la
partie 52a.

Sur ces surfaces 52a, 52b, 52c, est appliquée la borne cou
lissante 54 d'un microinterrupteur 57  qui peut s'interver
tir axialement sur deux positions; la première détermine
la fermeture des deux contacts électriques 55 et 56 du mi
crointerrupteur 57, la seconde position détermine l'ouver
ture de ces contacts électriques. Pour que la borne coulis
sante 54 se trouve dans la première position, il faut qu'
elle se trouve en contact avec la surface 52a du corps cy lindrique 52. Pour qu'elle se trouve dans la deuxième posi
tion, il faut qu'elle garde le contact soit avec la surfa
ce 52b, soit avec la surface 52c.

Pour ce qui est de la partie électrique, le contact 55 est
branché à la masse et le contact 56 est branché à l'élec
trovanne 34 au moyen du rhéophore 36; l'alimentation élec
trique de l'électrovanne 34 de la fig. 2 est d'ailleurs i
dentique à l'alimentation électrique de l'électrovanne cor
respondante 34 de la fig. 1.

Lorsque le vide dans le collecteur 7 est suffisamment éle
vé (à papillon fermé ou légèrement ouvert), la membrane 42
est déplacée vers le bas, et la borne coulissante 54 se
trouve ainsi en contact avec la surface 52b du corps cylin
drique 52; les deux contacts électriques 55 et 56 sont ou
verts, l'électrovanne 34 n'est pas excitée et l'orifice 38
étant fermé, le mélange n'est pas appauvri. A mesure que le
vide diminue dans le collecteur 7, ce qui augmente l'ouver
ture du papillon 6, la membrane 42 se déplace vers le haut
sous la poussée du ressort 45; par conséquent, la tige 51
se met dans une position telle, que la borne coulissante
54 du microinterrupteur 57 se trouve en contact avec la
partie 52a de l'élément 52, en refermant les contacts élec
triques 55 et 56. L'électrovanne 34 est excitée, elle ou
vre l'orifice 38 et met de l'air dosé à disposition du con
duit 38, afin d'appauvrir le mélange d'alimentation.

Lorsque le papillon 6 est très ouvert, le vide dans le col
lecteur 7 est très bas, et la membrane se trouve déplacée
par la suite vers le haut par le ressort 45; la tige 51 se
met dans une position de façon à ce que la borne 54 du mi
crointerrupteur 57 se trouve en contact avec la partie 52c
de l'élément 52, et ouvre les contacts électriques 55 et
56; l'électrovanne 34 n'est plus excitée, l'orifice 38 est fermé et le mélange n'est pas appauvri, mais il est mainte nu à un titre correct pour faire face aux exigences de la haute utilisation et de la pleine puissance du moteur.

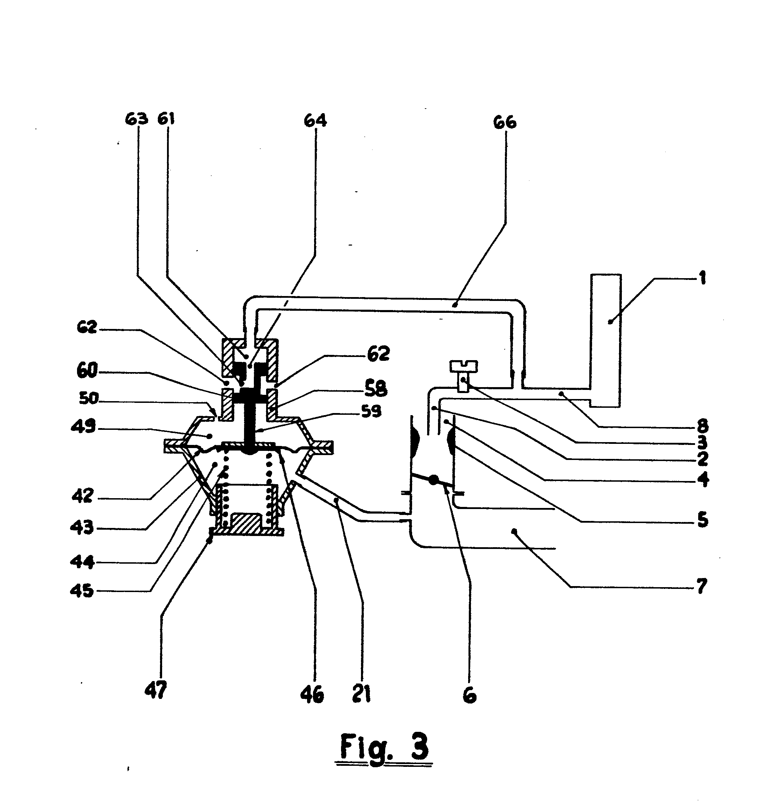

La fig. 3 représente une troisième version d'exécution de l'invention; sur cette figure, les éléments sont identiques à ceux qui sont indiqués par les mêmes numéros sur les fi gures précédentes.

Dans cette troisième version, une boîte métallique 58 ren ferme une membrane 42, qui divise l'intérieur de la boîte en deux chambres 44 et 49, non communicantes; la chambre 44 communique avec le collecteur d'aspiration 7 au-dessous du papillon 6 par la canalisation 21; la chambre 49 commu nique avec l'atmosphère par une ouverture 50.

Un ressort 45 est placé entre une plaquette 46 qui rend ri gide la partie centrale de la membrane 42, et la surface intérieure avant d'une boussole 47, laquelle est introdui te au moyen d'une vis dans la partie inférieure 43 de la boîte 58, afin de permettre un déplacement axial de la charge du ressort 45 sur la plaquette 46.

Une tige 59 est solidaire à la plaquette 46; cette tige se termine à la partie supérieure par un piston 60, apte à coulisser dans un cylindre 61, qui se prolonge par la boî te 58; ce cylindre 61 présente deux ouvertures radiales 62 qui peuvent le mettre en communication avec l'atmosphère.

Le piston 60 présente une gorge 63 communicant avec une ou verture axiale 64, qui donne à l'intérieur du cylindre 61, lequel est relié au conduit 8 par une tubature 66.

Lorsque le moteur fonctionne au ralenti, le papillon étant fermé, le vide dans le collecteur 7 et aussi dans la cham bre 44 maintient la membrane 42 vers le bas contre l'action du ressort 45; le piston 60 se maintient en bas en fermant les trous radiaux 62; la correction du mélange n'entre pas en fonction dans ces conditions, parce que le conduit 8 ne communique pas avec l'atmosphère à travers les trous 62.

Dans une position intermédiaire du papillon 6, entre la position de fermeture susdite et la position de pleine ouverture, la valeur de la dépression dans le collecteur 7 est plus petite par rapport à la valeur précédemment spécifiée. Cette dépression, également présente dans la chambre 44, permet au ressort 45 de soulever la membrane 42 et la tige 59 dans une certaine proportion; les trous 62 se trouvent ainsi en relation avec la gorge 63 du piston 60; l'air peut entrer librement dans le cylindre 61 et de là, atteindre le conduit 8 à travers la tubature 66 pour appauvrir le mélange lors de l'utilisation du moteur. Lorsque le papillon 6 est très ouvert ou complètement ouvert, la valeur du vide dans le collecteur 7 et aussi dans la chambre 44 est très basse, et le ressort 45 soulève complètement la membrane 42 et la tige 59; le piston 60 ferme les orifices 62, ce qui empêche la communication entre le conduit 8 et l'atmosphère.

Aux dispositifs décrits et illustrés de vastes modifications peuvent être apportées sans pour autant changer l'essence de l'invention; l'électrovanne 34 en particulier, en ce qui concerne les deux versions illustrées dans les fig. 1 et 2, peut commander un obturateur qui partialise la section du conduit 8 pour diminuer le débit du gaz lors des phases d'utilisation du moteur dans le but d'appauvrir le mélange refoulé par le carburateur; l'électrovanne 34 est soumise également aux éléments de commande pneumatiques décrits et illustrés.

Revendications

1. Dispositif automatique correcteur de la carburation des moteurs à combustion interne fonctionnant aux gaz de pétro les liquéfiés ou comprimés, composé d'une boîte rigide fai sant partie d'une installation d'alimentation du moteur; cette installation comprend un réducteur-vaporisateur (1), un conduit (8) pour envoyer le gaz sortant du réducteur-vaporisateur (1) à un mélangeur (2), introduit par le haut dans le conduit d'un carburateur (4) dont la bouche de sor tie (20) est placée dans la partie étroite du venturi (5) de ce carburateur (4); ce carburateur (4) est placé sur un collecteur (7) qui commence au-dessous du papillon (6) pour former le conduit d'aspiration du moteur; ce dispositif au tomatique est caractérisé par le fait qu'il comprend au moins un élément sensible au vide existant dans une partie de ce conduit d'aspiration; des dispositifs aptes à agir sur des organes reliés à la conduite (8) sont rendus soli daires à cet élément sensible pour contrôler le débit du gaz à travers cette conduite (8); ces dispositifs sont ap tes à actionner ces organes pour appauvrir le mélange refou lé du carburateur en répondant à un signal de vide relevé par l'élément sensible, qui se vérifie dans certaines condi tions de fonctionnement du moteur.

2. Dispositif selon la rev. 1, caractérisé par le fait que la boîte rigide (11) comprend deux éléments à membrane (12) et (22), soumis respectivement au vide existant dans le col lecteur (7) et au vide existant dans le venturi (5); ces membranes (12) et (22) soutiennent respectivement une pla quette métallique (13) et (23); sur la plaquette (13) s'ap puie un premier ressort (16) et sur la plaquette (23) s'ap puie un second ressort (26) pour que les membranes (12) et (22) se déplacent contre l'action du vide auquel elles sont soumises; le premier ressort (16) est soutenu par une pre mière rondelle (17) et le second ressort (26) est soutenu par une seconde rondelle (27), les deux rondelles étant iso lées électriquement de la boîte (11); la première rondelle est connectée électriquement à la masse M au moyen d'un rhé ophore (18); la seconde rondelle (27) est connectée électri quement à une première barrette métallique (19) par un rhé ophore (37); cette barrette (19) est introduite dans la ca vité de la boîte (11) délimitée par la première membrane (12) et par un couvercle (14); une seconde barrette métalli que (29), laquelle est introduite dans la cavité de la boî te (11) délimitée par la seconde membrane (22) et par un couvercle(24), est connectée à une électrovanne (34) qui a les moyens pour contrôler le débit du gaz dans la conduite (8); ces barrettes (19) et (29) sont respectivement isolées électriquement des rondelles (17) et (27) et des couvercles (14) et (24); l'électrovanne (34) est également connectée à l'interrupteur (40) du véhicule et par conséquent à la bat terie B; le branchement électrique de la batterie B et de la masse M se fait à interrupteur (40) fermé, pour exciter l'électrovanne (34) au cas où les deux plaquettes (13) et (23) se trouvent respectivement en contact avec les extrémi tés intérieures des deux barrettes (19) et (29).

3. Dispositif selon la rev. 1, caractérisé par le fait que la boîte rigide (41) comprend un élément à membrane (42), sensible au vide existant dans le collecteur (7); sur la plaquette métallique (46) s'appuie un ressort (45) pour que la membrane (42) se déplace contre l'action du vide; la pla quette (46) est solidaire à une tige (51) apte à position ner respectivement une borne coulissante (54) d'un microinterrupteur (57) en deux positions d'ouverture et de fermeture; ce microinterrupteur (57) fait partie d'un circuit électrique alimenté par la batterie B et dont l'électrovanne (34) fait également partie.

4. Dispositif selon la rev. 2 et/ou 3, caractérisé par le fait que les moyens de l'électrovanne (34) sont constitués d'un órifice calibré (38) qui, lorsque l'électrovanne est excitée, est apte à relier la conduite (8) à l'atmosphère.

5. Dispositif selon la rev. 1, caractérisé par le fait que les moyens de l'électrovanne (34) sont constitués d'un obturateur, qui, lorsque l'électrovanne (34) est excitée, est apte à partialiser la section de la conduite (8).

6. Dispositif selon la rev. 1, caractérisé par le fait que la boîte rigide (58) contient l'élément à membrane (42) sensible au vide existant dans le collecteur (7); la membrane (42) soutient une plaquette métallique (46), sur laquelle s'appuie un ressort (45) qui permet à la membrane (42) de se déplacer contre l'action du vide; à la plaquette (46) est rendue solidaire une tige (59) qui soutient un piston (60), introduit dans un cylindre (61); ce cylindre (61) communique avec l'atmosphère par deux ouvertures radiales (62) et communique à la conduite (8) par une tubature (66); ce piston (60) présente une gorge (63) qui communique avec une ouverture axiale (64) qui se jette à l'intérieur du cylindre (61) et qui, d'après une position déterminée du piston (60), permet la communication entre les deux ouvertures radiales (62) et l'ouverture axiale (64), pour envoyer de l'air à la conduite (8) dans le but d'appauvrir le mélange refoulé par le carburateur (4); cette position se vérifie pendant les phases d'utilisation du moteur.

0088199

Fig. 1

Fig. 2

**Fig. 3**

Office européen
des brevets

**RAPPORT DE RECHERCHE EUROPEENNE** 0088199

Numéro de la demande

EP 82 83 0131

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | REVUE TECHNIQUE AUTOMOBILE, vol. 36, mars 1981, pages 84-97, Boulogne Billancourt, FR. "Les avantages offerts par l'utilisation du GPL" * Voir page 93, colonne de droite, dernier alinéa; page 94, les figures, "Dispositif appauvrisseur Weber" et "Montage du mélangeur Weber" * | 1,4 | F 02 M 21/02 |
| | --- | | |
| X | FR-A-2 092 290 (WEBER) * Page 1, lignes 1-7; page 2, lignes 15-31; page 3, lignes 30-40; pages 4,5,6 en entier * | 1 | |
| | --- | | |
| X | FR-A-2 206 445 (LANDI DEN HARTOG) * Page 1, lignes 1-7; page 5, lignes 8-16; page 6, lignes 9-21,27,38; page 7, lignes 1-15 * | 1 | DOMAINES TECHNIQUES RECHERCHES (Int. Cl. ³) |
| | --- | | F 02 M |
| X | DE-C- 911 793 (BV-ARAL) * Page 1, lignes 1-6; page 2, lignes 8-61, lignes 76-126 * | 1 | F 02 D |
| | --- | | |
| A | US-A-2 988 078 (ENSIGN) * Colonne 1, lignes 38-48; colonne 5, lignes 13-72 * | 3 | |
| | --- -/- | | |

Le présent rapport de recherche a été établi pour toutes les revendications

| Lieu de la recherche LA HAYE | Date d'achèvement de la recherche 25-05-1983 | Examinateur JORIS J.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

Office européen
des brevets

0088199

## DOCUMENTS CONSIDERES COMME PERTINENTS

Page  2

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A- 986 897 (SERRUYS)<br>* Figure 3; page 3, colonne de droite dernier alinéa; page 4, colonne de gauche en entier * | 6 | |
| A | DE-A-1 935 139 (MENZENBACH)<br>* Page 2, dernier alinéa; page 4, alinéa 2 - page 6, ligne 1 * | 6 | |

DOMAINES TECHNIQUES
RECHERCHES (Int. Cl. ³)

Le présent rapport de recherche a été établi pour toutes les revendications

| Lieu de la recherche | Date d'achèvement de la recherche | Examinateur |
|---|---|---|
| LA HAYE | 25-05-1983 | JORIS J.C. |